# EUROPEAN PATENT APPLICATION

(11) **EP 4 270 608 A1**
(43) Date of publication of application: **01.11.2023**
(21) Application number: 22882534.5
(22) Date of filing: 20.09.2022
(51) Int. Cl.: H01M 50/102, H01M 50/547, H01M 50/148, H01M 50/249

(54) **BATTERY CELL, BATTERY AND ELECTRIC APPARATUS**

(30) Priority: 22.10.2021 CN 202122559769 U
(71) Applicant: Contemporary Amperex Technology Co., Limited, Ningde, Fujian 352100 (CN)
(72) Inventor: LIN, Denghua, Ningde, Fujian 352100 (CN); CHEN, Xinxiang, Ningde, Fujian 352100 (CN); GUO, Zhijun, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Ziebig Hengelhaupt Intellectual Property Attorneys Patentanwaltskanzlei PartGmbB
(86) International application number: PCT/CN2022/119817
(87) International publication number: WO 2023/065923

(57) **Abstract**

Embodiments of the present application provide a battery cell, a battery, and an electrical device, which have higher space utilization rate. The battery cell includes: a first surface, a first region of an edge of the first surface being recessed to form a first recess; a second surface, configured to arrange a first electrode terminal of the battery cell, the first surface and the second surface being perpendicular to a first direction; and the first electrode terminal, the first electrode terminal protruding from the second surface in the first direction and facing the first recess; wherein, in the first direction, the depth of the first recess is greater than the height of the first electrode terminal, and the projection area of the first recess on the first surface is greater than the projection area of the first electrode terminal on the first surface.

## Description

The present application claims priority to Chinese application No. 202122559769.5 filed with the China National Intellectual Property Administration on October 22, 2021 and entitled "BATTERY CELL, BATTERY AND ELECTRICAL DEVICE," which is incorporated herein by reference in its entirety.

### Technical Field

The present application relates to the technical field of batteries, and in particular, to a battery cell, a battery and an electrical device.

### Background

Energy saving and emission reduction is the key to the sustainable development of the automobile industry. In this case, electric vehicles have become an important part of the sustainable development of automotive industry due to their advantages of energy saving and environmental protection. For electric vehicles, battery technology is an important factor related to their development.

In order to adapt to people's fast-paced travel, the battery needs to meet the needs of fast charging during use. For this reason, it is necessary to increase the capacity of the battery cell, which may change the dimension of the battery cell, thus occupying more accommodating space. Therefore, how to improve the space utilization rate of the battery cells has become a problem to be solved.

### Summary of the Invention

The present application provides a battery cell, a battery, and an electrical device, which can improve the space utilization rate of the battery cell.

In a first aspect, a battery cell is provided, including:
a first surface, a first region of an edge of the first surface being recessed to form a first recess;
a second surface configured to arrange a first electrode terminal of the battery cell, the first surface and the second surface being perpendicular to a first direction; and
the first electrode terminal protruding from the second surface in the first direction and facing the first recess;
wherein, in the first direction, the depth of the first recess is larger than the height of the first electrode terminal, and the projection area of the first recess on the first surface is larger than the projection area of the first electrode terminal on the first surface.

Based on this technical solution, since the edge of the first surface of the battery cell is provided with the first recess, and the first electrode terminal of the battery cell protrudes from the second surface opposite to the first surface, therefore, when a plurality of battery cells are arranged along the protruding direction of the first electrode terminal, the first recesses of other battery cells adjacent to the battery cell can be used to accommodate the first electrode terminal of the battery cell, and the first electrode terminal of the battery cell does not need to occupy additional space, thus improving the space utilization rate of the battery cell.

In a possible implementation, in the first direction, the difference between the dimension of the battery cell and the dimension of the first recess of the battery cell is greater than or equal to 2 mm.

In this embodiment, along the first direction in which the plurality of battery cells are arranged, the dimension of the battery cells at the position corresponding to the first recess is greater than or equal to 2 mm, so as to ensure the accommodating space for the adapter components, plastic sheets, electrode assemblies and other components inside the battery cell while meeting the dimension requirements of the first recess.

In a possible implementation, the dimension of the first recess on the first surface along a second direction is greater than or equal to 12 mm, the second direction is perpendicular to a third surface of the battery cell, and the third surface is perpendicular to the first surface and the second surface.

In this embodiment, since space needs to be reserved for all of the first electrode terminal and its insulating wrapping, the riveting block of the battery cell, and the positioning of the riveting tool, the dimension of the first recess of the battery cell on the first surface along the second direction should be set within a reasonable range, for example greater than or equal to 12 mm.

In a possible implementation, the dimension of the first recess on the first surface along a third direction is greater than or equal to 15 mm, and the third direction is perpendicular to the first direction and the second direction.

In a possible implementation, the battery cell includes a case and an end cover, the case is configured to accommodate an electrode assembly of the battery cell, the end cover covers the case to enclose the electrode assembly in the case, the bottom wall of the case forms the first surface of the battery cell, and the end cover forms the second surface of the battery cell.

In a possible implementation, a region of the end cover corresponding to the electrode assembly protrudes in a direction facing away from the case, so as to form a groove on the side of the end cover facing the case.

In a possible implementation, the groove is configured to position the electrode assembly in a process of assembling the electrode assembly.

In a possible implementation, the contour line between the edge region of the end cover and the groove is configured to position a welding trajectory in a process of welding the case and the end cover.

In this embodiment, in the battery cell, a region of the end cover corresponding to the electrode assembly protrudes toward a direction facing away from its case, so as to form a groove on the side of the end cover facing the case. Such a design not only enables the groove to position the electrode assembly in a process of assembling the electrode assembly, but also enables the contour line between the edge region of the end cover and the groove to position a welding trajectory in a process of welding the case and the end cover.

In a possible implementation, the depth of the groove is between 0.4 mm and 3 mm.

In this embodiment, the depth of the groove cannot be too large, so as to avoid affecting the position of the welding tool in the welding process, and the depth of the groove cannot be too small, otherwise the above functions cannot be realized. Therefore, it is optimal to set the depth of the groove between 0.4 and 3 mm.

In a possible implementation, the distance between the contour line and the welding trajectory is greater than 0.5 mm.

In a possible implementation, a second region of the edge of the first surface is recessed to form a second recess, the first region is located at a first end of the first surface in a second direction, the second region is located at a second end of the first surface in the second direction, a second electrode terminal of the battery cell protrudes from the second surface of the battery cell in the first direction and faces the second recess, and the polarity of the second electrode terminal is opposite to that of the first electrode terminal. In the first direction, the depth of the second recess is larger than the height of the second electrode terminal, and the projection area of the second recess on the first surface is larger than the projection area of the second electrode terminal on the first surface.

In this embodiment, in addition to forming the first recess in the first region of the edge of the first surface of the battery cell, the battery cell also has a second recess and a second electrode terminal, wherein the second region of the edge of the first surface of the battery cell is recessed to form the second recess, and the second electrode terminal of the battery cell protrudes from the second surface opposite to the first surface. Therefore, when a plurality of battery cells are arranged along the protruding directions of the second electrode terminal, the second recess of another battery cell adjacent to the battery can accommodate the second electrode terminal of the battery cell and the first electrode terminal does not need to occupy additional space, thus improving the space utilization rate of the battery cell.

In a second aspect, a battery is provided, including the battery cell in the first aspect or any possible implementation of the first aspect.

In a third aspect, a battery is provided, including the battery cell in the first aspect or any possible implementation of the first aspect.

In a fourth aspect, an electrical device is provided, including the battery cell in the first aspect or any possible implementation of the first aspect, wherein the battery is configured to supply electric energy.

### Description of Drawings

In order to illustrate the technical solutions of the embodiments of the present application more clearly, the following briefly introduces the drawings required in the embodiments of the present application. Obviously, the drawings described below are only some examples of the present application. For those of ordinary skill in the art, other drawings can also be obtained according to the drawings without any creative effort.
Fig. 1 is a schematic structural diagram of a vehicle disclosed in an embodiment of the present application;
Fig. 2 is a schematic structural diagram of a battery disclosed in an embodiment of the present application;
Fig. 3 is a schematic structural diagram of a battery cell disclosed in an embodiment of the present application;
Fig. 4 is a schematic structural diagram of a battery cell disclosed in an embodiment of the present application;
Fig. 5 is a schematic structural diagram of a battery disclosed in an embodiment of the present application;
Fig. 6 is a schematic diagram showing connection of adjacent battery cells through a bus component disclosed in an embodiment of the present application;
Fig. 7 is a schematic structural diagram of a bus component disclosed in an embodiment of the present application;
Fig. 8 is a schematic structural diagram of a bus component disclosed in an embodiment of the present application;
Fig. 9 is a schematic structural diagram of a bus component disclosed in an embodiment of the present application;
Fig. 10 is a schematic structural diagram of a bus component disclosed in an embodiment of the present application;
Fig. 11 is a schematic diagram of the dimension of a bus component disclosed in an embodiment of the present application;
Fig. 12 is a schematic diagram of the dimension of a bus component disclosed in an embodiment of the present application;
Fig. 13 is a schematic structural diagram of a battery cell disclosed in an embodiment of the present application;
Fig. 14 is a schematic diagram showing the grouping process of a battery cell disclosed in an embodiment of the present application;
Fig. 15 is a side view of a battery cell disclosed in an embodiment of the present application;
Fig. 16 is a side view of a battery cell disclosed in an embodiment of the present application;
Fig. 17 is a schematic structural diagram of a groove on the end cover of a battery cell disclosed in an embodiment of the present application;

In the drawings, the drawings are not drawn to actual scale.

### Detailed Description

The implementations of the present application are further described in detail below with reference to the drawings and embodiments. The following detailed description of the embodiments and the drawings are used to illustrate the principles of the present application by way of example, but should not be used to limit the scope of the present application, that is, the present application is not limited to the described embodiments.

In the description of the present application, it should be noted that, unless otherwise stated, "a plurality of' means two or more; the orientation or positional relationships indicated by the terms "upper", "lower", "left", "right", "inner" and "outer" are only for facilitating the description of the present application and simplifying the description, rather than indicating or implying that the apparatus or element referred to must have a particular orientation or be constructed and operated in a particular orientation, and therefore will not be interpreted as limiting the present application. In addition, the terms "first", "second" and "third" are used for descriptive purposes only, and cannot be construed as indicating or implying relative importance. "Perpendicular" is not strictly perpendicular, but within the allowable range of error. "Parallel" is not strictly parallel, but within the allowable range of error.

The orientation words appearing in the following description are the directions shown in the drawings, and do not limit the specific structure of the present application. In the description of the present application, it should be further noted that the terms "installing", "linking", and "connecting" should be understood in a broad sense, unless otherwise explicitly specified or defined. For example, it may be a fixed connection, a detachable connection, or an integrated connection; and it may be a direct connection or an indirect connection through an intermediate medium. For those of ordinary skill in the art, the specific meanings of the above terms in the present application may be understood according to specific circumstances.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects before and after it are in an "or" relationship.

Unless otherwise defined, all technical and scientific terms used in the present application have the same meaning as commonly understood by those skilled in the art to which the present application belongs. The terms used in the specification of the present application are for the purpose of describing specific embodiments only, and are not intended to limit the present application. The terms "include/comprise" and "have" and any variations thereof in the specification and claims of the present application as well as in the above description of drawings are intended to cover a non-exclusive inclusion. The terms "first", "second" and the like in the description and claims of the present application or the above drawings are used to distinguish different objects, rather than to describe a specific sequence or primary-subordinate relationship.

Reference in the present application to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is understood explicitly and implicitly by those skilled in the art that the embodiments described in the present application can be combined with other embodiments.

Although the present application has been described with reference to the preferred embodiments, various improvements can be made thereto and components thereof can be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

In the present application, a battery refers to a physical module that includes one or more battery cells to provide electric energy. For example, the battery mentioned in the present application may include a battery module, a battery pack, or the like. The battery generally includes a box body for encapsulating one or more battery cells. The box body can prevent liquids or other foreign matters from affecting the charging or discharging of the battery cells.

Optionally, the battery cell may include a lithium-ion secondary battery, a lithium-ion primary battery, a lithium-sulfur battery, a sodium-lithium-ion battery, a sodium-ion battery, a magnesium-ion battery, or the like, which is not limited in the embodiments of the present application. In some implementations, a battery cell may also be called a cell.

The battery cell includes an electrode assembly and an electrolyte solution, and the electrode assembly consists of a positive electrode sheet, a negative electrode sheet and a separator. The battery cell works mainly relying on the movement of metal ions between the positive electrode sheet and the negative electrode sheet. The positive electrode sheet includes a positive electrode current collector and a positive electrode active material layer. A surface of the positive electrode current collector is coated with the positive electrode active material layer. A current collector not coated with the positive electrode active material layer protrudes from the current collector coated with the positive electrode active material layer. The current collector not coated with the positive electrode active material layer is used as a positive electrode tab. Taking a lithium-ion battery as an example, the material of the positive electrode current collector may be aluminum, and the positive active material may be lithium cobalt oxide, lithium iron phosphate, ternary lithium, lithium manganate, or the like. The negative electrode sheet includes a negative electrode current collector and a negative electrode active material layer. The negative electrode active material layer is coated on a surface of the negative electrode current collector, and a current collector not coated with the negative electrode active material layer protrudes from the current collector coated with the negative electrode active material layer. The current collector not coated with the negative electrode active material layer is used as a negative electrode tab. The material of the negative electrode current collector may be copper, and the negative electrode active material may be carbon, silicon, or the like. In order to ensure that no fusing occurs when a large current passes, there are a plurality of positive electrode tabs which are stacked together, and there are a plurality of negative electrode tabs which are stacked together. The separator may be made from polypropylene (PP), polyethylene (PE), or the like. In addition, the electrode assembly may be of a wound structure or a laminated structure, which is not limited in the embodiments of the present application.

In order to meet different power requirements, a plurality of battery cells in the battery may be in series connection, in parallel connection, or in parallel-series connection, wherein the parallel-series connection refers to mixing of the series connection and the parallel connection. Optionally, a plurality of battery cells may be in series, parallel or parallel-series connection to form a battery module first, and then a plurality of battery modules may be in series, parallel or parallel-series connection further to form a battery. That is to say, a plurality of battery cells may directly form a battery, or may form battery modules first, and then the battery modules form a battery. The battery is further arranged in an electrical device to provide electric energy for the electrical device.

In the box body of the battery, a signal transmission assembly may also be included. The signal transmission assembly may be configured to transmit a voltage and/or temperature signal of the battery cells. The signal transmission assembly may include a bus component, and the bus component is configured to realize electrical connection between a plurality of battery cells, such as parallel connection, series connection or parallel-series connection. The bus component may realize electrical connection between the battery cells by connecting the electrode terminals of the battery cells. In some embodiments, the bus component may be fixed to the electrode terminals of the battery cells by welding. The bus component transmits the voltage of the battery cells, and a higher voltage will be obtained after a plurality of battery cells are connected in series. Correspondingly, the electrical connection formed by the bus component may also be called "high voltage connection".

In addition to the bus component, the signal transmission assembly may also include a sensing device for sensing the state of the battery cells, for example, the sensing device may be configured to measure and transmit sensing signals such as temperature and state of charge of the battery cells. In the embodiments of the present application, electrical connecting components within the battery may include the bus component and/or the sensing device.

The bus component and the sensing device may be encapsulated in an insulating layer to form the signal transmission assembly. Accordingly, the signal transmission assembly may be configured to transmit a voltage and/or sensing signal of the battery cells. The signal transmission assembly has no insulating layer at junctions with the electrode terminals of the battery cells, i.e., the insulating layer has openings here to be connected with the electrode terminals of the battery cells.

The development of the battery technology needs to consider many design factors at the same time, such as energy density, cycle life, discharge capacity, charge-discharge rate and other performance parameters. In addition, it is also necessary to consider the space utilization rate of the battery cell to reduce the battery volume and expand the application scenarios of the battery.

In view of this, the present application provides a technical solution, in which a recess is provided on the edge of a first surface of a battery cell, and an electrode terminal of the battery cell is arranged at corresponding positions on a second surface opposite to the first surface. For the adjacent first battery cell and second battery cell, the recess of the second battery cell can be configured to accommodate the electrode terminal of the first battery cell, so that the electrode terminal does not need to occupy additional space. It only needs to make the bus component bypass the side wall of the second battery cell so that the two ends of the bus component are respectively connected to the electrode terminals of the first battery cell and the second battery cell, thereby realizing the electrical connection between the two battery cells.

The technical solutions described in the embodiments of the present application are all applicable to various devices using batteries, such as mobile phones, portable apparatuses, laptops, battery vehicles, electric toys, electric tools, electric vehicles, ships, spacecraft, and the like. For example, the spacecraft include airplanes, rockets, space shuttles, spaceships, etc.

It should be understood that the technical solutions described in the embodiments of the present application are not only applicable to the devices described above, but also applicable to all devices using batteries. However, for the sake of brevity, the following embodiments are described by taking an electric vehicle as an example.

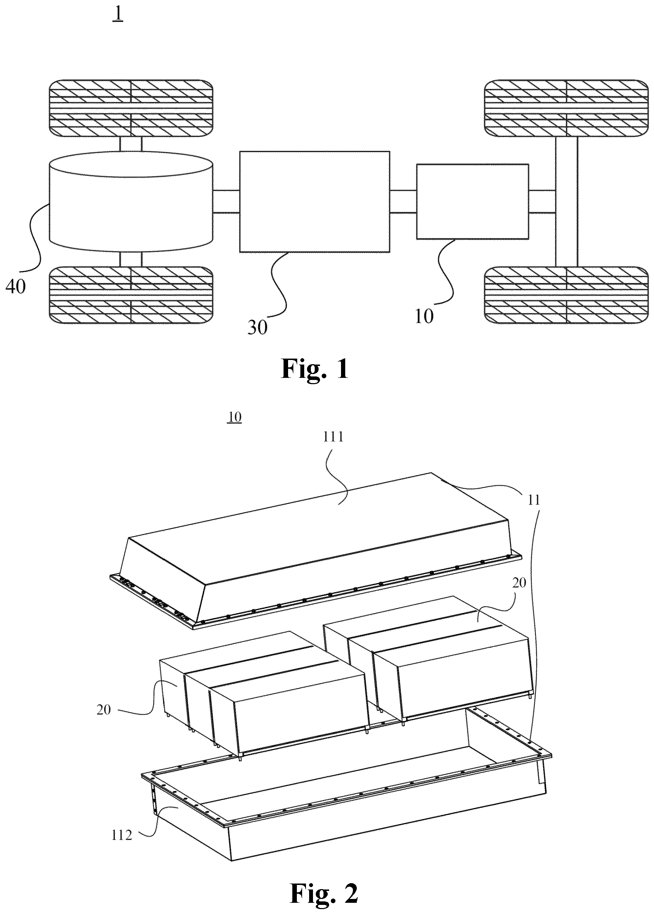

For example, as shown in Fig.1, a schematic structural diagram of a vehicle 1 according to an embodiment of the present application is shown. The vehicle 1 may be a fuel vehicle, a gas vehicle, or a new energy vehicle, and the new energy vehicle may be an all-electric vehicle, a hybrid electric vehicle, an extended range electric vehicle, or the like. A motor 40, a controller 30 and a battery 10 may be provided inside the vehicle 1, and the controller 30 is configured to control the battery 10 to supply power to the motor 40. For example, the battery 10 may be arranged at the bottom or the head or the tail of the vehicle 1. The battery 10 may be configured to supply power to the vehicle 1, for example, the battery 10 may be used as an operating power source of the vehicle 1, which is used for a circuit system of the vehicle 1, for example, for meeting the operation power requirements of the vehicle 1 during starting, navigation and running. In another embodiment of the present application, the battery 10 can not only be used as the operating power source of the vehicle 1, but also can be used as a driving power source of the vehicle 1 to provide driving power for the vehicle 1 instead of or partially instead of fuel or natural gas.

The battery 10 may include a plurality of battery cells. For example, as shown in Fig. 2 which is a schematic structural diagram of a battery 10 according to an embodiment of the present application, the battery 10 may include at least one battery module 200. The battery module 200 may include a plurality of battery cells 20. The battery 10 may further include a box body 11, the interior of the box body 11 is of a hollow structure, and the plurality of battery cells 20 are accommodated in the box body 11. As shown in Fig. 2, the box body 11 may include two parts, which are referred to as a first part 111 (upper box) and a second part 112 (lower box) respectively, and the first part 111 and the second part 112 are snap-fitted together. The shapes of the first part 111 and the second part 112 may be determined according to the combined shape of the plurality of battery cells 20, and at least one of the first part 111 and the second part 112 has an opening. For example, as shown in Fig. 2, both the first part 111 and the second part 112 may be hollow cuboids and each has only one surface being an opening surface, the opening of the first part 111 and the opening of the second part 112 are disposed opposite to each other, and the first part 111 and the second part 112 are snap-fitted together to form the box body 11 having a closed cavity. For another example, different from what is shown in Fig. 2, only one of the first part 111 and the second part 112 may be a hollow cuboid with an opening, and the other may be in a plate shape to cover the opening. For example, here, taking the second part 112 as a hollow cuboid with only one surface being an opening surface and the first part 111 being in a plate shape as an example, the first part 111 covers the opening of the second part 112 to form a box body with a closed cavity which can be used to accommodate a plurality of battery cells 20. The plurality of battery cells 20 are combined in parallel connection, in series connection or in parallel-series connection, and then placed in the box body 11 formed by snap-fitting the first part 111 with the second part 112 together.

Optionally, the battery 10 may further include other structures, which will not be repeated here. For example, the battery 10 may further include a bus component configured to realize electrical connection between the plurality of battery cells 20, for example, in parallel connection, series connection or parallel-series connection. Specifically, the bus component may realize electrical connection between the battery cells 20 by connecting the electrode terminals of the battery cells 20. Further, the bus component may be fixed to the electrode terminals of the battery cells 20 by welding. The electric energy of the plurality of battery cells 20 may be further led out through an electrically conductive mechanism penetrating the box body. Optionally, the electrically conductive mechanism may also belong to the bus component.

Depending on different power requirements, the number of battery cells 20 may be set as any numerical value. The plurality of battery cells 20 may be in series, parallel or parallel-series connection to achieve a larger capacity or power. Since the number of battery cells 20 included in each battery 10 may be large, for the convenience of installation, the battery cells 20 may be arranged in groups, and each group of battery cells 20 constitutes a battery module. The number of battery cells 20 included in a battery module is not limited and can be set t as required. A battery may include a plurality of battery modules which may be connected in series, in parallel or in parallel-series.

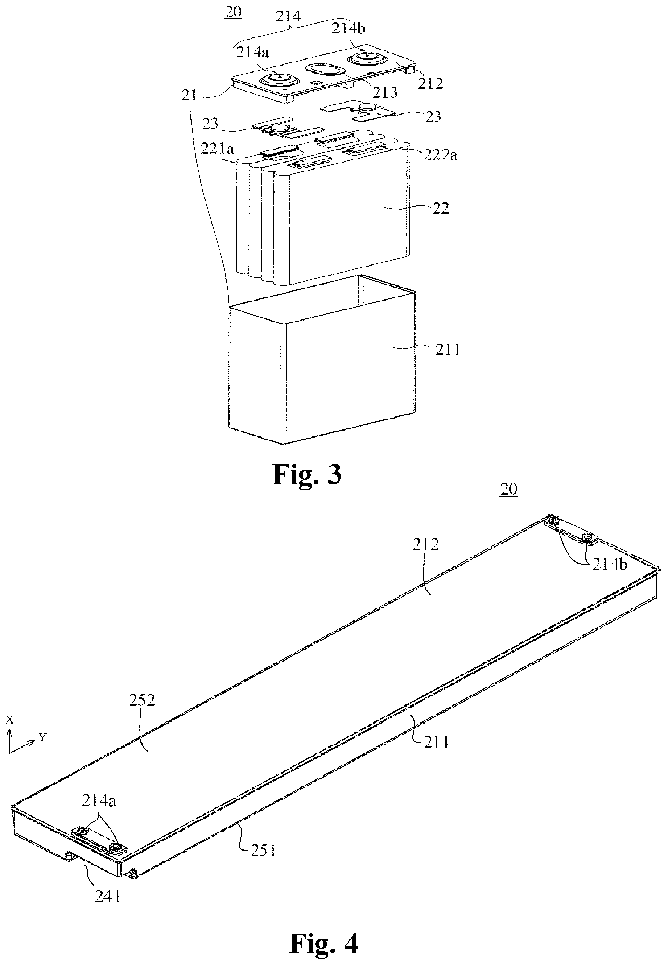

As an example, as shown in Fig. 3, which is a schematic structural diagram of a battery cell 20 according to an embodiment of the present application, the battery cell 20 includes one or more electrode assemblies 22, a case 211 and an end cover 212. The case 211 and the end cover 212 form a shell or battery box 21. The walls of the case 211 and the end covers 212 are both called the walls of the battery cell 20, wherein for a cuboid battery cell 20, the walls of the case 211 include a bottom wall and four side walls. The case 211 depends on the combined shape of one or more electrode assemblies 22. For example, the case 211 can be a hollow cuboid or cube or cylinder, and one of the planes of the case 211 has an opening so that one or more electrode assemblies 22 can be placed within the case 211. For example, when the case 211 is a hollow cuboid or cube, one of the planes of the case 211 is an open surface, that is, the plane does not have a wall so that the inside and outside of the case 211 communicate. When the case 211 can be a hollow cylinder, the end face of the case 211 is an open surface, that is, the end face does not have a wall so that the inside and outside of the case 211 communicate. The end cover 212 covers the opening and is connected with the case 211 to form a closed cavity for placing the electrode assembly 22. The case 211 is filled with an electrolyte, such as an electrolyte solution.

The battery cell 20 may further include two electrode terminals 214, and the two electrode terminals 214 may be provided on the end cover 212. The end cover 212 is generally in a plate shape, and the two electrode terminals 214, namely a positive electrode terminal 214a and a negative electrode terminal 214b, are fixed on the plate surface of the end cover 212. Each of the electrode terminals 214 is provided with a connecting member 23, alternatively referred to as a current collecting member 23, which is located between the end cover 212 and the electrode assembly 22 for electrically connecting the electrode assembly 22 and the electrode terminals 214.

As shown in Fig. 3, each electrode assembly 22 has a first tab 221a and a second tab 222a. The first tab 221a and the second tab 222a are opposite in polarity. For example, when the first tab 221a is a positive tab, the second tab 222a is a negative tab. The first tabs 221a of one or more electrode assemblies 22 are connected to one electrode terminal through one connection member 23, and the second tabs 222a of one or more electrode assemblies 22 are connected to another electrode terminal through another connection member 23. For example, the positive electrode terminal 214a is connected to the positive electrode tab through one connection member 23, and the negative electrode terminal 214b is connected to the negative electrode tab through another connection member 23.

In the battery cell 20, according to actual usage requirements, one or more electrode assemblies 22 can be arranged. As shown in Fig. 3, 4 independent electrode assemblies 22 are arranged in the battery cell 20.

A pressure relief mechanism 213 may also be provided on the battery cell 20. The pressure relief mechanism 213 is configured to actuate to relieve the internal pressure or temperature when the internal pressure or temperature of the battery cell 20 reaches a threshold.

The pressure relief mechanism 213 may be various possible pressure relief structures, which are not limited in the embodiments of the present application. For example, the pressure relief mechanism 213 may be a temperature-sensitive pressure relief mechanism configured to melt when the internal temperature of the battery cell 20 provided with the pressure relief mechanism 213 reaches a threshold; and/or, the pressure relief mechanism 213 may be a pressure-sensitive pressure relief mechanism configured to rupture when the internal gas pressure of the battery cell 20 provided with the pressure relief mechanism 213 reaches a threshold value.

It should be understood that the plurality of battery cells 20 included in the battery 10 in the embodiment of the present application can be arranged and placed in any direction in the box body 11. For example, taking the cuboid battery cell 20 shown in Fig. 3 as an example, as shown in Fig. 2, a plurality of battery cells 20 may be installed in the box body in the vertical direction as shown in Fig. 3, so that the end covers 212 of the plurality of battery cells 20 installed face the upper box 111, while the bottom walls of the cases 211 of the battery cells 20 face the lower box 112. For another example, different from Fig. 2, the plurality of battery cells 20 as shown in Fig. 3 can also be arranged laterally in the box body.

During the grouping process of the cuboid battery cells 20 shown in Fig. 3, when subjected to an external force such as an impact, the battery cells 20 are likely to be misaligned with each other, resulting in pulling of the electrode terminals 214 of the battery cells 20 by the bus component, and also, the side wall area of the battery cell 20 is relatively large, easily resulting in deformation. For this reason, the shape of the battery cell 20 can be set as a blade, that is, the length of the battery cell can be increased, so that the case 211 of the battery cell 20 can play a certain supporting role, share a part of the force. Moreover, the electrode terminals 214 are disposed at the end of the battery cells 20 along the length direction, so as to reduce the pulling of the electrode terminals 214 of the battery cells by the bus component.

When the energy density of the battery cell 20 is constant, as the dimension of the battery cell 20 in the length direction increases, the dimension in the thickness direction will decrease, and the battery cell 20 will become flatter to avoid the capacity of the battery cell 20 from being too large. A too large capacity will result in a too large over-current of the electrode terminal, which makes the heat generated on the electrode terminal exceed the temperature requirement of the battery cell 20. As the thickness of the battery cell 20 is reduced, when the electrode terminal 214 is arranged at the end of the battery cell 20, the dimension of the electrode terminal 214 will be limited. If the dimension of the electrode terminal 214 is too small, the over-current requirement cannot be met.

For this reason, the embodiment of the present application may adopt a blade-shaped battery cell 20 as shown in Fig. 4. As shown in Fig. 4, the battery cell 20 includes a first surface 251, a second surface 252 and a first electrode terminal 214a. A first region of the edge of the first surface 251 is recessed to form a first recess 241, and the second surface 252 is used for arranging the first electrode terminal 214a of the battery cell 20, wherein the first surface 251 and the second surface 252 are perpendicular to the first direction X.

The battery cell 20 further includes a first electrode terminal. The first electrode terminal may be a positive electrode terminal 214a or a negative electrode terminal 214b, and the following description will be made by taking the first electrode terminal as the positive electrode terminal 214a as an example. The first electrode terminal 214a protrudes from the second surface 252 of the battery cell 20 in the first direction X, and faces the first recess 241. The positions of the positive electrode terminal 214a and the negative electrode terminal 214b in Fig. 4 can be interchanged. Hereinafter, as an example, the electrode terminal at the corresponding position of the first recess 241 will be described as the positive electrode terminal 214a.

The first surface 251 may be the bottom wall of the case 211 of the battery cell 20, and a first region of the first surface 251 is located at an edge of the battery cell 20 in the X direction. The second surface 252 may be the surface of the end cover 212 of the battery cell. Among others, the depth of the first recess 241 in the first direction X is greater than the height of the first electrode terminal 214a, and the projection area of the first recess 241 on the first surface 251 is larger than the projection area of the first electrode terminal 214a on the first surface 251. In this way, the first recess 241 can accommodate the first electrode terminals 214a of other battery cells 20 arranged adjacent to the battery cell 20 in the first direction.

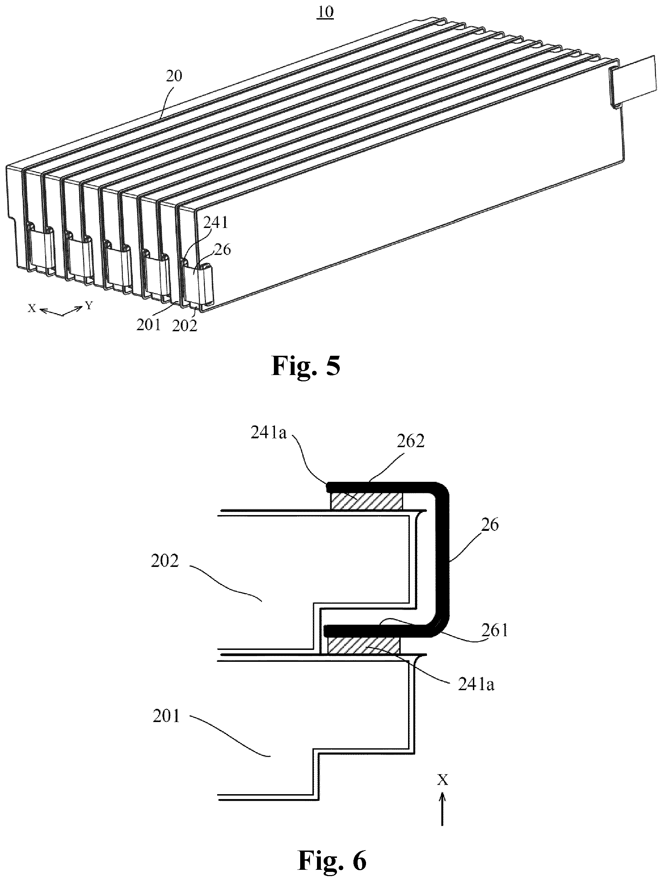

Specifically, it is as shown in Fig. 5 which is a side view of a battery 10 according to an embodiment of the present application. The battery 10 includes a box body 211 and a plurality of battery cells 20 accommodated in the box body 211, which, for example, include adjacent first battery cell 201 and second battery cell 202. The plurality of battery cells 20 are arranged along the first direction X, and a first region of the edge of the first surface 251 of each of the plurality of battery cells 20 is recessed to form a first recess 241. The first electrode terminal 214 a of each battery cell 20 protrudes from the second surface 252 of the battery cell 20. Here, the protruding direction of the first electrode terminal 214a is the first direction X.

The battery 10 further includes a first bus component 26. The first bus component 26 is configured to electrically connect the first electrode terminals 214a of two adjacent battery cells 20. For example, the bus component 26 between the first battery cell 201 and the second battery cell 202 is configured to electrically connect the first electrode terminal 214a of the first battery cell 201 and the first electrode terminal 214a of the second battery cell 202. As shown in Fig. 6, the first bus component 26 bypasses the side wall of the second battery cell 202 parallel to the first direction X, so that a first end 261 of the first bus component 26 is connected to the first electrode terminal 214a of the first battery cell 201, and a second end 262 of the first bus component 26 is connected to the first electrode terminal 214a of the second battery cell 202, wherein the first end 261 of the first bus component 26 and the first electrode terminals 214a of the first battery cell 201 are jointly accommodated in the first recess 241 of the second battery cell 202.

The edge of the first surface 251 of the battery cell 20 is provided with the first recess 241, and the first electrode terminal 214a of the battery cell 20 protrudes from the second surface 252 opposite to the first surface 251. Therefore, when a plurality of battery cells 20 are arranged along the protruding direction of the first electrode terminal 214a, the first recess 241 of the second battery cell 202 among the two adjacent battery cells can accommodate the first electrode terminal 214a of the first battery cell 201, and accommodate the first bus component 26 for connecting the two battery cells 20. The first bus member 26 can bypass the side wall of the second battery cell 202, so that the first end 261 of the first bus member 26 is connected to the first electrode terminal 214a of the first battery cell 201, and the second end 262 is connected to the first electrode terminal 214a of the second battery cell 202. Since a plurality of battery cells 20 are arranged along the protruding direction X of their respective first electrode terminals 214a, and the first electrode terminals 214a are accommodated in the first recesses 241 of adjacent battery cells 20, no module assembly space is occupied, which improves the space utilization rate of the battery cell 20.

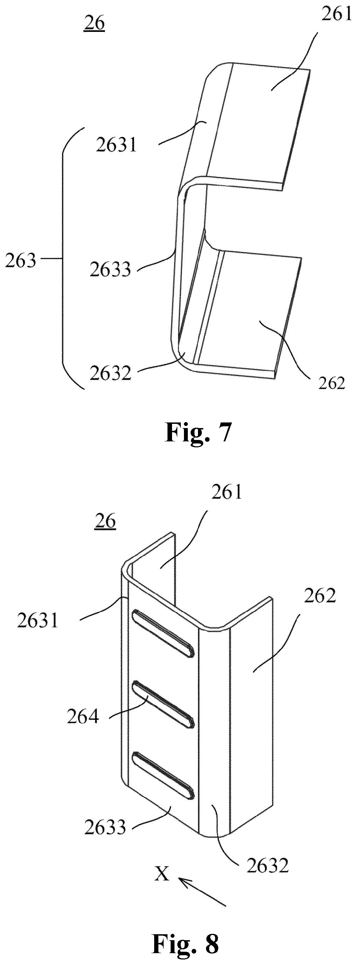

In an implementation, as shown in Fig. 7, the first bus component 26 includes a first end 261, a second end 262, and a bending portion 263 located between the first end 261 and the second end 262. Among them, the bending portion 263 is configured to be bendable, so that the first bus member 26 can bypass the side wall of the second battery cell 202 parallel to the first direction X.

In this way, since the bending portion 263 is provided on the first bus member 26, the first bus member 26 can more easily bypass the side walls of the battery cells 20 in the process of grouping a plurality of battery cells 20, facilitating the installation of the first bus component 26.

In an implementation, as shown in Fig. 7, the bending portion 263 includes a first bending region 2631, a second bending region 2632, and a middle region 2633, wherein the first bending region 2631 is configured to bend to connect the first end 261 and the middle region 2633, and the second bending region 262 is configured to bend to connect the second end 262 and the middle region 2633.

In an implementation, as shown in Fig. 7, the thickness of the first bending region 2631 and the thickness of the second bending region 2632 are smaller than the thickness of the middle region 2633. In this way, for the first bus member 26, the thickness of the first bending region 2631 and the thickness of the second bending region 2632 of the bending portion 263 are smaller than the thickness of the middle region 2633, which is equivalent to reducing the thickness of the first bending region 2631 and the second bending region 2631, making it easier to realize the bending of the first bus component 26.

In an implementation, the middle region 2633 is perpendicular to the first surface 251 and the second surface 252 of the battery cell 20. Since the middle region of the bending portion of the first bus component 26 is perpendicular to the first surface 251 and the second surface 252 of the battery cell 20, the first bus component 26 occupies the least space in the direction perpendicular to the first surface 251 and the second surface 252, which further improves the space utilization rate of the battery cell.

Further, as shown in Fig. 8, reinforcing ribs 264 may be provided on the middle region 2633 to improve the strength of the first bus component 26. The reinforcing rib 264 may be parallel to the first direction X, for example.

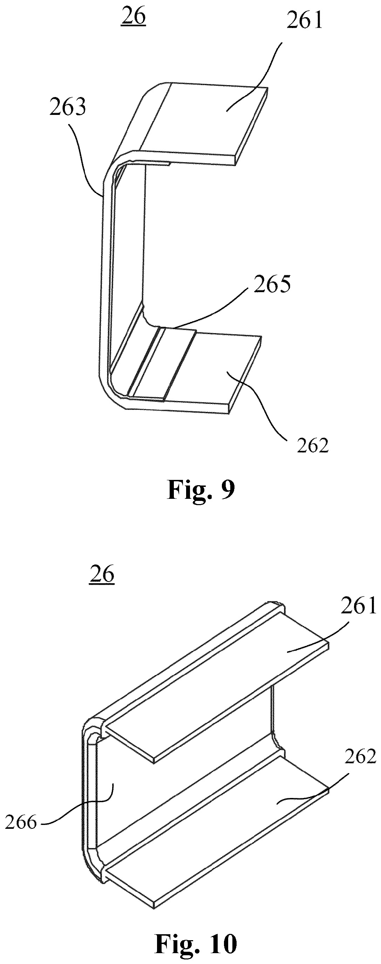

In an implementation, as shown in Fig. 9, an insulating layer 265 is provided on the surface of the bending portion 263 facing the battery cell 20, and the insulating layer can be, for example, an insulating patch or an insulating coating; or, in another implementation, as shown in Fig. 10, the bending portion 263 is wrapped with an insulating material 266. Since the bending portion 263 is provided with the insulating layer 265 or wrapped with the insulating material 266, the electrical contact between the first bus component 26 and the first electrode terminal 214a of the battery cell 20 can be avoided, thereby improving the safety of the battery 10.

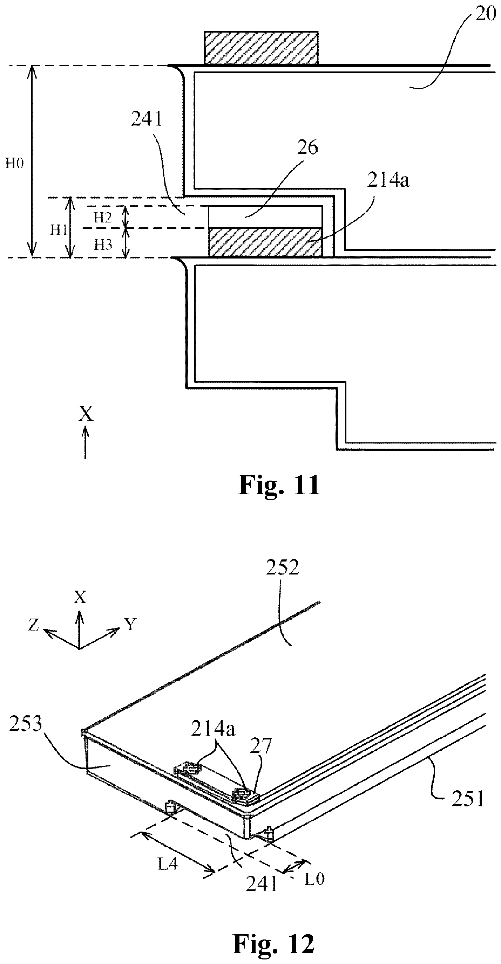

In an implementation, as shown in Fig. 11, in the first direction X, the dimension H1 of the first recess 241 is greater than the sum of the height H3 of the first electrode terminal 214a and the dimension H2 of the first bus component 26, so that the first recess 241 of the battery cell 20 can accommodate the first electrode terminals 214a of other adjacent battery cells 20 and the first bus component 26.

For example, in the first direction X, the difference between the dimension H0 of the battery cell 20 (not including the height H3 of the first electrode terminal 214a) and the dimension H2 of the first recess 241 of the battery cell 20 may be greater than or equal to 2 mm, that is, H0-H1 > 2 mm. In this way, in the first direction X, when the dimension of the battery cell 20 at the position corresponding to the first recess 241 is greater than or equal to 2 mm, it can ensure the accommodating space for the adapter components, plastic sheets, electrode assemblies 22 and other components inside the battery cell 20 while meeting the dimension requirements of the first recess 241.

For another example, as shown in Fig. 12, the dimension L0 of the first recess 241 on the first surface 251 along a second direction Y is greater than or equal to 12 mm, the second direction Y is perpendicular to the third surface 253 of the battery cell 20, and the third surface 253 is perpendicular to the first surface 251 and the second surface 252.

In the second direction Y, since space needs to be reserved for all of the first electrode terminal 214a and its insulating wrapping, the riveting block 27 of the battery cell 20, and the positioning of the riveting tool, the dimension of the first recess 241 of the battery cell 20 on the first surface 251 along the second direction Y should be set within a reasonable range, for example greater than or equal to 12 mm. Usually, in order to meet the over-current requirements of the first electrode terminal 214a, the diameter D of the first electrode terminal 214a usually satisfies D ≥5 mm. The unilateral dimension of the riveting block 27 in the second direction Y can be set as L1≥2-3 mm. For example, the unilateral thickness of the insulating wrapping for wrapping the first electrode terminal 214a can be set as L2≥0.6 mm, and for example, the unilateral gap of the riveting fixture during positioning can be set as L3≧1 mm. Therefore, the dimension L0 of the first recess 241 along the second direction Y generally needs to be larger than 5+(2+0.6+1)*2=12.2 mm.

For another example, as shown in Fig. 12, the dimension L4 of the first recess 241 on the first surface 251 along a third direction Z is greater than or equal to 15 mm, so as to meet the requirements for the distance between the two first electrode terminals 214a, and the thickness of the insulating wrapping of each first electrode terminal 214a, and the like.

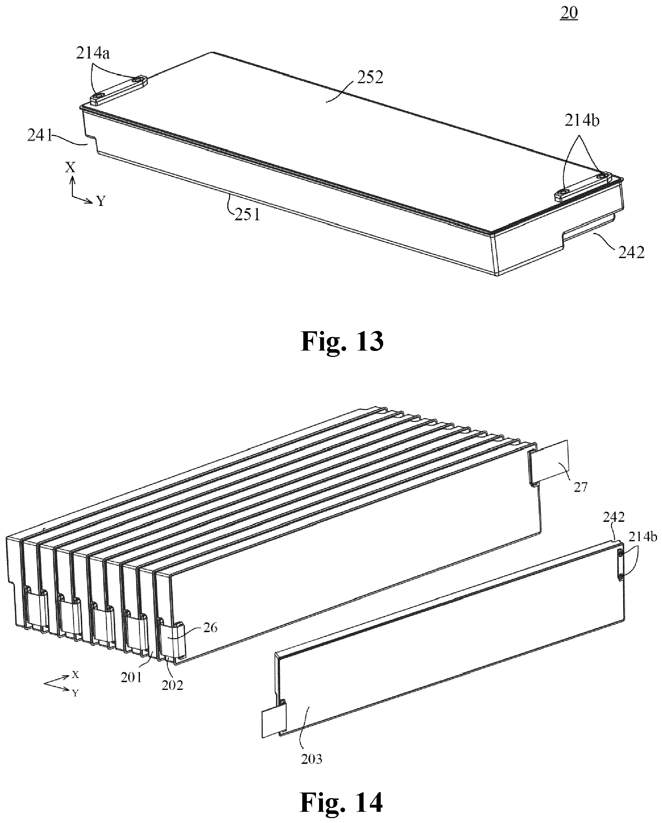

In an implementation, as shown in Fig. 13, a second region of the edge of the first surface 251 of each battery cell 20 is recessed to form a second recess 242, wherein the first region is located at a first end of the first surface 251 in the second direction Y, and the second region is located at a second end of the first surface 251 in the second direction Y. The second electrode terminal 214b of each battery cell 20 protrudes from the second surface 252 of the battery cell 20, and the polarity of the second electrode terminal 214b is opposite to that of the first electrode terminal 214a. The positions of the positive electrode terminal 214a and the negative electrode terminal 214b in Fig. 13 can be interchanged, and as an example, the electrode terminal at the corresponding position of the second recess 242 will be taken as the negative electrode terminal 214b for description in the present application.

As shown in Fig. 14, the plurality of battery cells 20 further include a third battery cell 203 adjacent to the second battery cell 202, the battery 10 further includes a second bus component 27, and the second bus component 27 is configured to connect the second electrode terminal 214b of the second battery cell 202 and the second electrode terminal 214b of the third battery cell 203. Similarly, the second bus member 27 will eventually bypass the side wall of the third battery cell 203 parallel to the first direction X, so that the first end of the second bus member 27 is connected to the second electrode terminal 214b of the second battery cell 202, and the second end of the second bus component 27 is connected to the second electrode terminal 214b of the third battery cell 203. The first end of the second bus component 27 connected to the second battery cell 202 and the second electrode terminal 214b of the second battery cell 202 are jointly accommodated in the second recess 242 of the third battery cell 203.

It should be understood that, for the specific details of the second recess 242 and the second bus component 27, reference may be made to the above-mentioned related descriptions on the first recess 241 and the first bus component 26, and for the sake of brevity, details are not repeated here. A first electrode terminal is provided on the second surface 252 of the battery cell 20 corresponding to the first recess 241, and a second electrode terminal is provided on the second surface 252 of the battery cell 20 corresponding to the second recess 242. The first electrode terminal and the second electrode terminal may be a positive electrode terminal 214a and a negative electrode terminal 214b, respectively, or the first electrode terminal and the second electrode terminal may be a negative electrode terminal 214b and a positive electrode terminal 214a, respectively.

Taking the connection between the first electrode terminals 214a of the first battery cell 201 and the second battery cell 202 as an example, the grouping process of a plurality of battery cells 20 will be described below. After the arrangement of the first battery cell 201 is completed, the first end 261 of the first bus component 26 is welded together with the first electrode terminal 214a at the corresponding position on the second surface 252 of the first battery cell 201; secondly, the second surface 251 of the second battery cell 202 is stacked toward the first surface of the first battery cell 201, and the first electrode terminal 214a of the first battery cell 201 is accommodated in the first recess 241 of the second battery cell 202; then, the first bus member 26 is bent to bypass the side wall of the second battery cell 202 parallel to the first direction X, and the second end 262 of the first bus member 26 and the first electrode terminal 214a of the second battery cell 202 are welded together. In this way, the electrical connection between the first electrode terminals 214a of the first battery cell 201 and the second battery cell 202 is completed. Similarly, the electrical connection between the second electrode terminals 214b of the adjacent second battery cells 202 and third battery cells 203 can also be realized. The plurality of battery cells 20 are grouped in a similar manner to form the battery 10.

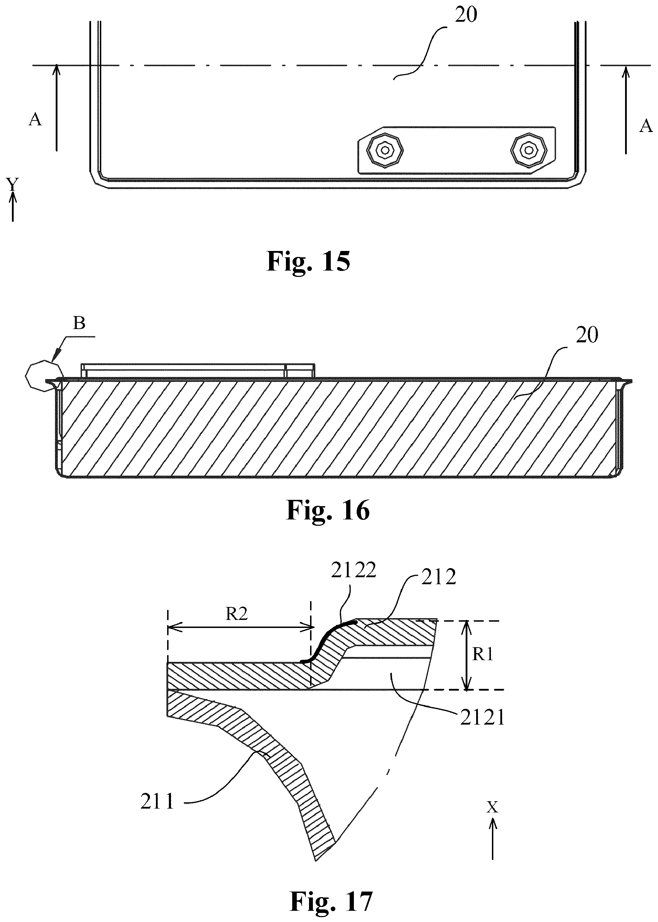

In an implementation, reference is made to Figs. 15 to 17, wherein Fig. 16 is a cross-sectional view of the battery cell shown in Fig. 15 along the direction A-A, that is, the second direction Y, and Fig. 17 is a partial enlarged view of region B in Fig. 16. A region of the end cover 212 of the battery cell 20 corresponding to the electrode assembly 22 protrudes facing away from the case 211 to form a groove 2121 on a side of the end cover 212 facing the case 211.

The groove 2121 can position the electrode assembly 22 during the process of assembling the electrode assembly 22. Further, a contour line 2122 between the edge region of the end cover 212 and the groove 2121 is configured to position the welding trajectory during the welding process of the case 211 and the end cover 212.

Optionally, on a cross-section of a plane perpendicular to the first direction X, the dimension of the groove 2121 is greater than or equal to the dimension of the electrode assembly 22 so that the electrode assembly 22 can be accommodated in the groove 2121.

As shown in Fig. 17, the depth R1 of the groove 2121 in the first direction X is, for example, between 0.4 mm and 3 mm. The depth of the groove 2121 cannot be too large, so as to avoid affecting the position of the welding tool in the welding process, and the depth of the groove 2121 cannot be too small, otherwise the above functions cannot be realized. Therefore, it is optimal to set the depth of the groove between 0.4 and 3 mm.

As shown in Fig. 16, the distance R2 between the contour line 2122 and the welding trajectory can be greater than 0.5 mm, for example, to leave a space for the welding tool during the welding process, so as not to affect the positioning requirements of the laser welding lens.

It can be seen that in the battery cell 20, the region of the end cover 212 corresponding to the electrode assembly 22 protrudes in a direction facing away from the case 211 to form the groove 2121 on the side of the end cover 212 facing the case 211. Such a design not only enables the groove 2121 to position the electrode assembly 22 in a process of assembling the electrode assembly 22, but also enables the contour line 2122 between the edge region of the end cover 212 and the groove 2121 to position the welding trajectory in the process of welding the case 211 and the end cover 212.

An embodiment of the present application further provides an electrical device. The electrical device may include the battery 10 in the foregoing embodiments to supply electric energy to the electrical device. Optionally, the electrical device may be a vehicle, ship or spacecraft.

By arranging the battery 10 of the foregoing embodiments in the electrical device, since the electrode terminals of the battery cells 20 in the battery 10 are accommodated in the recesses of the adj acent battery cells, space is saved, the space utilization rate is improved, facilitating the promotion and use of the electrical device.

Although the present application has been described with reference to the preferred embodiments, various improvements can be made thereto and components thereof can be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A battery cell, including
a first surface, a first region of an edge of the first surface being recessed to form a first recess;
a second surface configured to arrange a first electrode terminal of the battery cell, the first surface and the second surface being perpendicular to a first direction; and
the first electrode terminal protruding from the second surface in the first direction and facing the first recess;
wherein, in the first direction, the depth of the first recess is larger than the height of the first electrode terminal, and the projection area of the first recess on the first surface is larger than the projection area of the first electrode terminal on the first surface.

2. The battery cell according to claim 1, wherein in the first direction, the difference between the dimension of the battery cell and the dimension of the first recess of the battery cell is greater than or equal to 2 mm.

3. The battery cell according to claim 1 or 2, wherein the dimension of the first recess on the first surface along a second direction is greater than or equal to 12 mm, the second direction is perpendicular to a third surface of the battery cell, and the third surface is perpendicular to the first surface and the second surface.

4. The battery cell according to claim 3, wherein the dimension of the first recess on the first surface along a third direction is greater than or equal to 15 mm, and the third direction is perpendicular to the first direction and the second direction.

5. The battery cell according to any one of claims 1 to 4, wherein the battery cell includes a case and an end cover, the case is configured to accommodate an electrode assembly of the battery cell, the end cover covers the case to enclose the electrode assembly in the case, the bottom wall of the case forms the first surface of the battery cell, and the end cover forms the second surface of the battery cell.

6. The battery cell according to claim 5, wherein a region of the end cover corresponding to the electrode assembly protrudes in a direction facing away from the case, so as to form a groove on a side of the end cover facing the case.

7. The battery cell according to claim 6, wherein the groove is configured to position the electrode assembly in a process of assembling the electrode assembly.

8. The battery cell according to claim 6 or 7, wherein the contour line between the edge region of the end cover and the groove is configured to position a welding trajectory in a process of welding the case and the end cover.

9. The battery cell according to any one of claims 6 to 8, wherein the depth of the groove is between 0.4 mm and 3 mm.

10. The battery cell according to claim 8, wherein the distance between the contour line and the welding trajectory is greater than 0.5 mm.

11. The battery cell according to any one of claims 6 to 10, wherein on the cross section of a plane perpendicular to the first direction, the dimension of the groove is greater than or equal to the dimension of the electrode assembly.

12. The battery cell according to any one of claims 1 to 11, wherein a second region of the edge of the first surface is recessed to form a second recess, the first region is located at a first end of the first surface in a second direction, the second region is located at a second end of the first surface in the second direction, a second electrode terminal of the battery cell protrudes from the second surface of the battery cell in the first direction and faces the second recess, and the polarity of the second electrode terminal is opposite to that of the first electrode terminal, wherein, in the first direction, the depth of the second recess is larger than the height of the second electrode terminal, and the projection area of the second recess on the first surface is larger than the projection area of the second electrode terminal on the first surface.

13. A battery, including the battery cell according to any one of claims 1 to 12.

14. An electrical device, including the battery cell according to any one of claims 1 to 12, wherein the battery cell is configured to provide electric energy.
